# EUROPEAN PATENT SPECIFICATION

(11) **EP 4 572 292 B1**
(45) Date of publication and mention of the grant of the patent: **12.08.2026**
(21) Application number: 23216738.7
(22) Date of filing: 14.12.2023
(51) Int. Cl.: H04L 67/12, H04L 69/18

(54) **COMMUNICATION MODULE, COMMUNICATION SYSTEM, AND METHOD FOR THE COMMUNICATION MODULE**
KOMMUNIKATIONSMODUL, KOMMUNIKATIONSSYSTEM UND VERFAHREN FÜR DAS KOMMUNIKATIONSMODUL
MODULE DE COMMUNICATION, SYSTÈME DE COMMUNICATION ET PROCÉDÉ POUR LE MODULE DE COMMUNICATION

(43) Date of publication of application: 18.06.2025
(73) Proprietor: NXP B.V., 5656 AG Eindhoven (NL)
(72) Inventor: Walrant, Thierry G. C., 5656 AG Eindhoven (NL); Elend, Bernd Uwe Gerhard, 5656 AG Eindhoven (NL)
(74) Representative: Schmütz, Christian Klaus Johannes

(56) References cited:
- US-A1- 2017 120 846
- US-B1- 11 818 235

## Description

### TECHNICAL FIELD

The present disclosure relates to a communication module, a communication system and a method for the communication module.

### BACKGROUND

Vehicles often comprise a communication system including a plurality of components. Among others, the communication system may comprise a first device which operates as a controller. The controller may be used to control a second device, which in an example is a device that serves a specific purpose, for example to control an electric actuator. The controller may not be able to communicate directly with the second device, or conversely the second device may not be able to communicate directly with the controller, but a further device, referred to as a bridge, may be required for communication between the controller and the second device. The bridge may be coupled to the controller so that communication can be performed between the controller and the bridge. The bridge may be coupled to the second device so that communication can be performed between the bridge and the second device. Due to the two communication connections, the controller can communicate with the second device via the bridge. It is possible that the communication connection referred to as the first communication connection between the controller and the bridge is not permanent, but that the first communication connection is only established when required. In a corresponding manner, the communication connection referred to as the second communication connection between the bridge and the second device may not be permanent, but the second communication connection may be established only when needed. The establishment of the first and/or second communication connection may lead to a delay in communication between the controller and the second device via the bridge.

US 2017/120846 A1 relates to a system and a method for communication with electronic devices via an electronic interface of a vehicle.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a communication module is provided, which comprises: a first communication interface, a second communication interface, a memory, and a processing unit, wherein the first communication interface is configured to receive an instruction message according to a first communication protocol, wherein the instruction message representing a predefined reference inquiry and an inquiry response instruction, wherein the communication module is configured to save the reference inquiry and the inquiry response instruction in the memory, such that the inquiry response instruction is allocated with the reference inquiry, wherein the second communication interface is configured to receive an inquiry message according to a second communication protocol, wherein the inquiry message representing an inquiry corresponding to the reference inquiry, wherein the processing unit is configured in response to receiving the inquiry message to control the second communication interface, such that the second communication interface transmits a command message according to the second communication protocol, wherein the command message represents the inquiry response instruction, wherein the second communication interface is configured to receive a response message according to the second communication protocol, wherein the response message indicates to be in response to the command message, and wherein the processing unit is configured in response to receiving the response message to control the first communication interface, such that the first communication interface transmits a feedback message according to the first communication protocol, wherein the feedback message indicates the reception of the inquiry message and/or the transmission of a command message and/or a reception of a response message.

In one or more embodiments, the processing unit is configured in response to receiving the instruction message to control the first communication interface, such that the first communication interface transmits a confirmation message according to the first communication protocol, wherein the confirmation message indicates the reception of the instruction message.

In one or more embodiments, the instruction message also representing protocol implementation data for implementing the second communication protocol, and wherein the communication module is configured to implement the second communication protocol based on the received protocol implementation data.

In one or more embodiments, the processing unit is configured in response to the implementation of the second communication protocol to control the first communication interface, such that the first communication interface transmits an implementation message according to the first communication protocol, wherein the implementation message indicates the successful implementation of the second communication protocol.

In one or more embodiments, the first communication protocol and the second communication protocol are different protocols.

In one or more embodiments, the processing unit is configured to control the second communication interface for transmitting the command message without previously controlling the first communication interface for transmitting a message to notify the first device about the received inquiry message.

In one or more embodiments, the processing unit is configured in response to receiving the response message to control the first communication interface to transmit the feedback message without decoding the response message or interpreting the response message.

In one or more embodiments, the first communication interface is one communication interface of the following group of communication interfaces: ethernet communication interface, CAN communication interface, LIN communication interface, SPI communication interface, 10BASE-T1S interface, WiFi interface, FlexRay interface, USB interface.

In one or more embodiments, the second communication interface is at least one communication interface of the following group of communication interfaces: ethernet communication interface, CAN communication interface, LIN communication interface, SPI communication interface, I2C interface, UART interface, FlexRay interface, I2S/PMD, PWM, I3C, GPIO.

According to a second aspect of the present disclosure, a communication system is provided, which comprises: a first device, the communication module according to the first aspect or any of the preceding embodiments of the first aspect, a second device, wherein the first device comprises a third communication interface, that is configured to receive and transmit messages according to the first communication protocol, wherein the first device is configured to transmit the instruction message via the third communication interface to the first communication interface of the communication module, wherein the second device comprising a fourth communication interface, wherein the second device is configured to create and transmit the inquiry message via the fourth communication interface to the second communication interface of the communication module.

In one or more embodiments, the second device is configured to receive the command message via the fourth communication interface, and wherein the second device is configured in response to receive the command message to create and transmit the response message via the fourth communication interface to the second communication interface of the communication module.

In one or more embodiments, the first device is a network controller.

In one or more embodiments, the communication module is integrated into the second device.

According to a third aspect of the present disclosure, a method for communication module comprising a first communication interface, a second communication interface, a memory, and a processing unit is provided, wherein the method comprising the steps: a) receiving an instruction message according to a first communication protocol at first communication interface, wherein the instruction message representing a predefined reference inquiry and an inquiry response instruction, b) saving the reference inquiry and the inquiry response instruction in the memory, such that the inquiry response instruction is allocated with the reference inquiry, c) receiving an inquiry message according to a second communication protocol at the second communication interface, wherein the inquiry message representing an inquiry corresponding to the reference inquiry, d) transmitting a command message according to the second communication protocol via the second communication interface in response to receiving the inquiry message, wherein the command message represents the inquiry response instruction, e) receiving a response message according to the second communication protocol at the second communication interface, wherein the response message indicates to be in response to the command message, and f) transmitting a feedback message according to the first communication protocol via the first communication interface in response to receiving the response message, wherein the feedback message indicates the reception of the inquiry and/or the transmission of a command message and/or a reception of a response message.

In one or more embodiments, the instruction message may also represent protocol implementation data for implementing the second communication protocol, and wherein the method comprising also the following sub-step a-b) being executed between step a) and c): a-b) implementing the second communication protocol for the second communication interface based on the received protocol implementation data.

In accordance with a fourth aspect of the present disclosure, a computer program is provided, comprising executable instructions which, when executed by a processing unit, cause the processing unit being configured to carry out the method of the third aspect and/or one or more embodiments thereof.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figures 1 and 3 show simplified block diagrams of the communication module and the communication system.
Figure 2 shows a simplified flow chart of the message exchange.
Figure 4 shows a simplified flow chart of the method.

### DESCRIPTION OF EMBODIMENTS

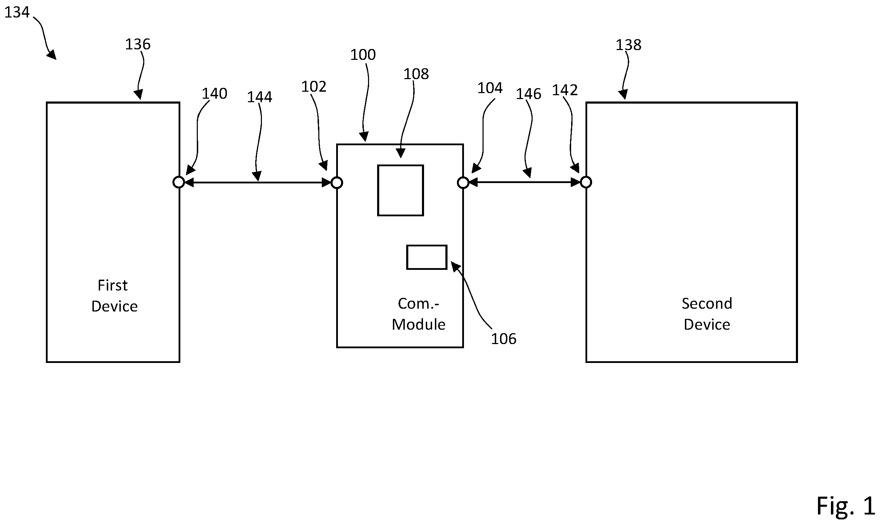

Figure 1 schematically illustrates an embodiment of a communication module 100. The communication module 100 may be configured as a single device or as an integral unit of another device. The communication module 100 may form part of a communication system 134, which is also shown schematically in Figure 1. The following explanations of the communication module 100 may apply in an analogous manner to the communication module 100 if the communication module 100 forms part of the communication system 134. In an analogous manner, the following explanations relating to the communication system 134, in particular if they relate to the associated communication module 100, may apply also to the communication module 100 if the communication module 100 is provided as a single device or as a unit of another device.

The communication module 100 comprises a first communication interface 102 and a second communication interface 104. The first and second communication interfaces 102, 104 may be different communication interfaces 102, 104. The communication module 100 further comprises a processing unit 108 and a memory 106. The processing unit 108 may be coupled to the first communication interface 102 to receive and/or transmit a message via the first communication interface 102. The processing unit 108 may be coupled to the second communication interface 104 to receive and/or send a (different) message via the second communication interface 104. The memory 106 of the communication module 100 may be configured to store a message, a component of the message, and/or data. The processing unit 108 may be coupled to the memory 106 and/or configured to store a received message, a component of a received message, and/or data of a received message in the memory 106. The processing unit 108 may be configured to read a stored message, a component of a stored message, and/or data of a stored message from the memory.

Figure 1 schematically illustrates the communication system 134. The communication system 134 comprises a first device 136, a second device 138, and the communication module 100. The first device 136 may be configured as a controller, in particular as a network controller. The second device 138 may be configured as a decentralized device that may serve a predefined purpose. The second device 138 is in particular not a controller.

The first device 136 may comprise a third communication interface 140. The third communication interface 140 of the first device 136 may be coupled to the first communication interface 102 of the communication module 100 via a signal connection 144, also referred to as a first signal connection 144. The first communication interface 102 and/or the third communication interface 140 may be configured to send and/or receive messages according to a first communication protocol. The first communication protocol may be, for example, an Ethernet protocol, in particular according to the 10BASE-T1S standard, or a Controller Area Network, CAN, protocol, in particular according to Classical CAN, according to CAN FD, or according to CAN XL. In principle, the first communication protocol can also be a protocol other than the two aforementioned protocols.

The second device 138 may comprise a fourth communication interface 142. The fourth communication interface 142 of the second device 138 may be coupled to the second communication interface 104 of the communication module 100 via a further signal connection 146, also referred to as the second signal connection 146. The second communication interface 104 and/or the fourth communication interface 142 may be configured to send and/or receive messages according to a second communication protocol. The second communication protocol and the first communication protocol may be different communication protocols. For example, the second communication protocol may be a protocol according to the I2C standard, the SPI standard, the UART standard or the FlexRay standard. In principle, the second communication protocol can also be a protocol other than one of the aforementioned protocols.

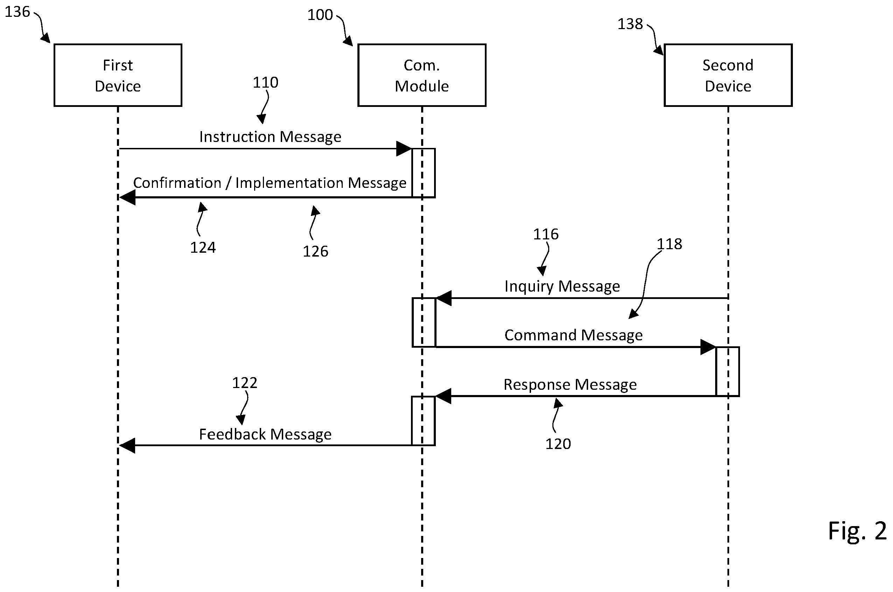

Figure 2 schematically shows an example of a signal flow chart. The signal flowchart schematically shows an example of the transmission of messages between the first device 136 and the communication module 100, and of messages between the communication module 100 and the second device 138.

The first communication interface 102 of the communication module 100 is configured to receive an instruction message 110 according to a first communication protocol. In an example, the first device 136 may be configured to send the instruction message 110 to the first communication interface 102 of the communication module 100 via the third communication interface 140, and in particular the first signaling connection 144. The instruction message 110 represents a predefined reference inquiry and, in particular, a predefined inquiry response instruction.

It may be desirable and advantageous for the communication system 134 if the second device 138 transmits a message to the communication module 100, wherein the message is intended for further transmission to the first device 136, that the communication module 100 responds to the message independently instead of the first device 136. To enable the communication module 100 to independently respond to the second device 138, the first device 136 may transmit the aforementioned instruction message 110 to the communication module 100. If the communication module 100 receives a message from the second device 138 via the second communication interface 104, in an example, if the received message represents an inquiry that corresponds to the reference inquiry, the communication module 100 may respond autonomously based on the predefined inquiry response instruction. From the perspective of the second device 138, a time referred to as a delay time between sending the message to the communication module 100 and receiving a response from the communication module 100 may be very small. The small delay time may in particular be attributed to the fact that the first device 136 may anticipate in advance that the second device 138 may send an anticipated message to the communication module 100 and furthermore that it may be predetermined before the message is sent by the first device 136 with which instruction to respond, namely in particular with the predefined inquiry response instruction. In particular, the small delay time may also be attributed to the fact that the communication module 100 does not need to perform complex arithmetic operations or analysis to respond in response to the received inquiry based on the inquiry response instruction. In an example, the communication module 100 may perform a comparison between the received inquiry and the previously received reference inquiry. If the inquiry matches the previously received reference inquiry, the communication module 100 may simply use the inquiry response instruction to respond to the inquiry.

It was previously explained that the instruction message 110 represents the predefined reference inquiry and the inquiry response instruction. For example, the reference inquiry may be a predefined interrupt, a predefined error message, a predefined status message, a predefined data request, or a predefined request. In an example, it may be known in advance what various inquiries may potentially be sent by the second device 138. From the group of different inquiries that the second device 138 may theoretically send, one or more of the inquiries may be selected to form the predefined reference inquiry. Further, at a time when the second device 138 has not yet sent an inquiry from the group of different inquiries, the instruction with which the first device 136 would respond to the reference inquiry may be predetermined by the first device 136. This inquiry may form the reference inquiry, and the predetermined inquiry may form the predefined inquiry response instruction. Both the reference inquiry and the associated inquiry response instruction may be represented by the instruction message 110. By transmitting the instruction message 110 from the first device 136 to the communication module 100, the communication module already receives the reference inquiry and the associated inquiry response instruction before the second device 138 has made an inquiry corresponding to the reference inquiry.

After the communication module 100 has received the instruction message 110 via the first communication interface 102, it is advantageous if the communication module 100 stores the reference inquiry represented by the instruction message 110 and the inquiry response instruction also represented by the instruction message 110. The communication module 100 is configured to store the reference inquiry and the inquiry response instruction in the memory 106. The reference inquiry and the associated inquiry response instruction may be stored in the memory 106 such that the inquiry response instruction is associated with the reference inquiry. In an example, the processing unit 108 may be configured to extract the reference inquiry and the associated inquiry response instruction from the instruction message 110. Further, in an example, the processing unit 108 may be configured to store the reference inquiry and the inquiry response instruction in the memory 106 such that the inquiry response instruction is associated with the reference inquiry. The processing unit 108 may also be configured to search the memory 106 for the reference inquiry and, if a match is found, to read the inquiry response instruction from the memory 106.

The second communication interface 104 of the communication module 100 is configured to receive an inquiry message 116 according to the second communication protocol. The inquiry message 116 represents an inquiry corresponding to the reference inquiry. The inquiry represented by the inquiry message 116 may be, for example, an interrupt, an error message, a status message, a data request, or a request. In an example, the inquiry represented by the inquiry message 116 may be one of a predefined group of different inquiries that the second device 138 can theoretically send.

In an example, the second device 138 is configured to generate the inquiry message 116. Furthermore, the second device 138 may be configured to transmit the inquiry message 116 to the second communication interface 104 of the communication module 100 via the fourth communication interface 142, and in particular via the second signal connection 146.

As can be seen from Figure 2 in an example, it is in particular envisaged that the communication module 100 receives the instruction message 110 before the communication module 100 receives the inquiry message 116. At the time the communication module 100 receives the inquiry message 116, the communication module 100 may have already stored the reference inquiry and inquiry response instruction in the memory 106.

In an example, the processing unit 108 of the communication module 100 may be configured to extract the inquiry represented by the inquiry message 116 from the inquiry message 116. Further, the processing unit 108 may search the memory 106 for the reference inquiry based on the extracted inquiry until the processing unit 108 finds the reference inquiry corresponding to the inquiry. In the memory, the reference inquiry may be associated with the inquiry response instruction. Against this background, in an example, the processing unit 108 of the communication module 100 may be configured to read the inquiry response instruction associated with the reference inquiry from the memory 106 based on the inquiry represented by the inquiry message.

Based on the instruction message 110 and/or based on the reference inquiry stored in the memory 106 and the inquiry response message also stored in the memory 106, in response to receiving the inquiry message 116, it is not necessary for the communication module 100 to forward the inquiry represented by the inquiry message to the first device 136 in order to receive an instruction from the first device 136 in response. Instead of forwarding the inquiry represented by the inquiry message to the first device 136 and waiting for the response with a time delay, the communication module 100 may independently respond based on the previously received instruction message 100 and/or based on the reference inquiry and the inquiry response instruction with a very small time delay.

The processing unit 108 of the communication module 100 is configured to, in response to receiving the inquiry message (and/or the inquiry represented by the inquiry message), control the second communication interface 104 such that the second communication interface 104 sends a command message 118 according to the second communication protocol, wherein the command message 118 represents the inquiry response instruction. It is considered an advantage that the communication module 100 and/or the processing unit 108 do not have to have the ability to understand and/or decode the content of the inquiry response instruction. This capability may be limited for the first device 136. As a result, the processing unit 108 may respond particularly quickly to receiving the inquiry message (and/or the inquiry represented by the inquiry message) by sending the command message 118. To generate the command message 118, the processing unit 108 may read out the inquiry response instruction from the memory 106 and, based on the inquiry response instruction, control the second communication interface 104 such that the command message 118 sent by the second communication interface 106 represents the inquiry response instruction. From the perspective of the second device 138, the delay time between when the inquiry message 116 is sent and when the command message 118 is received may be very small. In an example, the small delay time may prevent the second device 138 from waiting a long time for the command message 118 and, in an example, from performing any further steps while waiting.

In an example, the inquiry represented by the inquiry message 116 may be an interrupt. The interrupt may indicate and/or be caused by an interruption in operation of the second device 138. The second device 138 may be configured to receive the command message 118 via the fourth communication interface 142. In an example, the command message 118 may be transmitted from the second communication interface 104 to the fourth communication interface 142 via the second signaling connection 146. The command message 118 represents the inquiry response instruction. The second device 138 may be configured to, for example, cancel and/or resolve the interruption of operation based on the inquiry response instruction and/or resume operation of the second device 138. In another example, the device 138 may be configured to perform steps based on the inquiry response instruction, such as steps to resolve the interruption in operation.

The second communication interface 104 of the communication module 100 is configured to receive a response message 120 according to the second communication protocol, wherein the response message 120 indicates that the response message 120 is a response to the command message 118. In an example, the second device 138 is configured to generate and/or transmit the response message 120 to the second communication interface 104 of the communication module 100 via the fourth communication interface 142, in particular via the second signal connection 146, in response to receiving the command message 118. The second device 138 may be configured to generate the response message 120 such that the response message 120 indicates that the response message 120 is a response to the command message 118. In an example, the response message 120 may indicate that an event, which led to the interrupt, has been resolved and/or steps have been and/or are being performed to resolve the interrupt.

After the communication module 100 receives the response message 120, it may be advantageous if the communication module 100 notifies the first device 136 that the instruction message 110 and/or the reference inquiry and the inquiry response instruction from the instruction message 110 were successfully used. In an example, the communication module 100 may be configured to send a feedback message 122 to the first device 136, wherein the feedback message 122 directly or indirectly indicates the successful use of the instruction message 110 and/or the successful use of the reference inquiry and the inquiry response instruction. Against this background, the processing unit 108 may be configured to, in response to sending the command message 118 and/or receiving the response message 120, control the first communication interface 102 to cause the first communication interface 102 to send a feedback message 122 in accordance with the first communication protocol. The processing unit 108 may further be configured to control the first communication interface 102 such that the feedback message 122 indicates receipt of the inquiry message 116 and/or transmission of the command message 118 and/or receipt of the response message 120. Each message of the group of messages comprising the inquiry message 116, command message 118, and response message 120 may directly or indirectly indicate successful use of the instruction message 110 and/or the reference inquiry and inquiry response instruction. In an example, the feedback message 122 does not represent the inquiry represented by the inquiry message 116. In another example, the feedback message 122 does not represent the inquiry response instruction represented by the command message 118.

In an example, the processing unit 108 may be configured to monitor the second communication interface 104 in response to sending the command message 118. Further, the processing unit 108 may be configured to indicate in the feedback message 122 a missing response message 120, if the processing unit 108 does not receive the response message 120 via the second communication interface within a predefined time, also referred to as expectation time.

Based on the transmission of the feedback message 122, the first device 136 receives information, at least indirectly, that the second device 138 has made the inquiry represented by the inquiry message 116. To the extent that further actions and/or instructions beyond the inquiry response instruction are necessary and/or appropriate, the first device 136 may generate and/or perform such further action and/or instructions in response to the feedback message 122.

It has previously been explained that it may be an advantage that the communication module 100 and/or the processing unit 108 do not have to have the capability to understand and/or decode the content of the inquiry and/or inquiry response instruction. In an example, the processing unit 108 is configured to, in response to receiving the response message 120, control the first communication interface 102 to transmit the feedback message 122 without decoding the response message 120 or interpreting the response message 120. As an effect, the processing unit 108 is capable of causing the feedback message 122 to be sent without a large time delay relative to receipt of the response message 120.

It may be advantageous to the first device 136 if the first device 136 is acknowledged the received, preferably correctly received, instruction message 110 by the communication module 100. In an example, the processing unit 108 of the communication module 100 may be configured to, in response to receiving the instruction message 110, control the first communication interface 102 such that the first communication interface 102 sends a confirmation message 124 in accordance with the first communication protocol. The processing unit 108 may be configured to control the first communication interface 102 to generate and/or send the confirmation message 124 such that the confirmation message 124 indicates receipt of the instruction message 110. In an example, the confirmation message 124 does not represent the reference inquiry and/or does not represent the inquiry response instruction. Thus, the amount of data required to generate and/or send the confirmation message 124 can be kept small. The acknowledged receipt of the instruction message 110 by communication module 100 may support that communication module 100 can independently respond to inquiry message 116.

The communication module 100 may be configured as a separate device. In an example, communication module 100 may generally be used in connection with different second devices 138. In an example, the communication module 100 may be used to communicate with the second device 138 via a FlexRay protocol as a second communication protocol. In another example, the communication module 100 may be used to communicate with another second device 138 via an I2C protocol as a second communication protocol. In another example, the communication module 100 may be used to communicate with another second device 138 via an SPI protocol as a second communication protocol. In another example, the communication module 100 may be used to communicate with another second device 138 via an UART protocol as a second communication protocol. Against this background, it is desirable to be able to customize the ability of the second communication interface 104 to send and/or receive messages according to the second communication protocol. In an example, the instruction message 110 may also represent protocol implementation data for implementing the second communication protocol. In an example, the instruction message 110 may represent the predefined reference inquiry, the inquiry response instruction, and the protocol implementation data. In an example, the first device 136 may be configured to generate and/or send a corresponding instruction message 110. Further, the communication module 100 may be configured to implement the second communication protocol based on the received protocol implementation data. The implementation may be performed by the communication module 100 such that the second communication interface 104 achieves the ability to send and/or receive messages according to the second communication protocol.

In an example, the processing unit 108 of the communication module 100 may be configured to, in response to the implementation of the second communication protocol (based on the protocol implementation data), control the first communication interface 102 to cause the first communication interface 102 to send an implementation message 126 according to the first communication protocol, wherein the implementation message 126 indicates successful implementation of the second communication protocol. As a result, the first device 136 may receive information that the communication module 100 is capable of communicating with the second device 138. The ability of the second communication module 100 to communicate with the second device 138 may allow the first device 136 to assume that the communication module 100 can successfully use the instruction message 110 and/or the reference inquiry and the inquiry response instruction.

The instruction message 110, the inquiry message 116, the command message 118, the response message 120, the feedback message 122, the confirmation message 124, and the implementation message 126 have in particular been named accordingly for distinction purposes only and may each be a different message. In a corresponding manner, for example, the reference inquiry may also be understood as an inquiry that is referred to as a reference inquiry for distinguishing purposes only. Similarly, for example, the inquiry response instruction may also be understood as an instruction that is referred to as an inquiry response instruction for distinguishing purposes only.

It has already been explained above that the first communication protocol and the second communication protocol are preferably different protocols. For example, the first communication protocol may be a communication protocol according to an Ethernet standard, a CAN standard, a LIN standard, a FlexRay standard, an SPI standard, a USB standard, or a WiFi standard. An example of the Ethernet standard is the standard for 10BASE-T1S. An example of the CAN standard refers to Classical CAN, CAN FD, or CAN XL. In an example, the first communication interface 102 is formed as one communication interface from the following group of communication interfaces: Ethernet communication interface, CAN communication interface, LIN communication interface, SPI communication interface, 10BASE-T1S interface, WiFi interface.

The second communication protocol may be, for example, a communication protocol according to an Ethernet standard, a CAN standard, a LIN standard, an SPI standard, an I2C standard, a UART standard, a USB standard, or a FlexRay standard. An example of the Ethernet standard is the standard for 10BASE-T1S. An example of the CAN standard refers to Classical CAN, CAN FD, or CAN XL. In an example, the second communication interface 104 is formed as one communication interface or a group of at least one communication interface from the following group of communication interfaces: Ethernet communication interface, CAN communication interface, LIN communication interface, SPI communication interface, I2C interface, UART interface, Flexray interface, 12S/PMD, PWM, I3C, GPIO. For example, the second communication interface may be formed by one interface or two interfaces (combined) form the aforementioned group of interfaces.

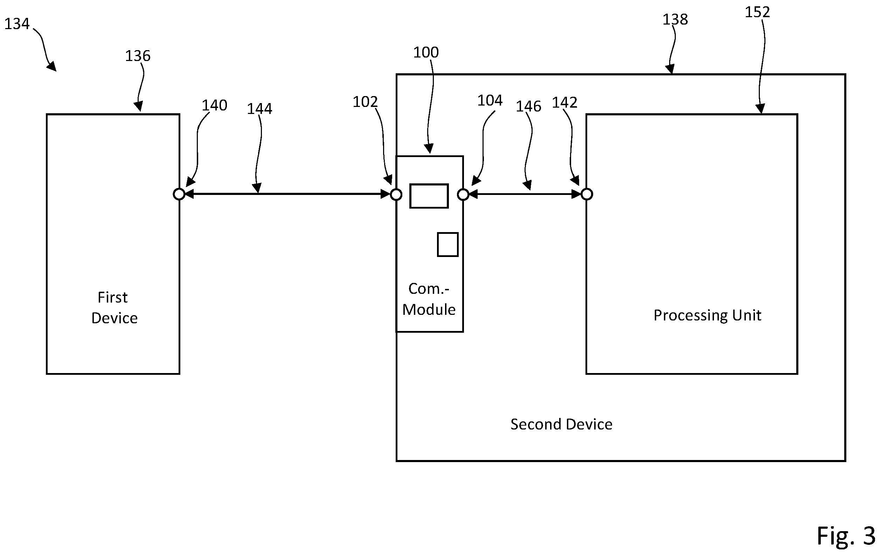

Figure 3 schematically illustrates another example of the communication system 134. For the communication system 134, reference is made to the preceding explanations, preferred features, technical effects and advantages in an analogous manner, as previously explained in connection with Figures 1 and 2, in particular for the communication module 100 and/or the communication system 134.

Compared to the example of the communication system 134 of Figure 1, the communication system 134 of Figure 3 differs in that the communication module 100 is integrated into the second device 138. As can be seen from Figure 3, the second device 138 may comprise a (further) processing unit 152. The fourth communication interface 142 may form part of the (further) processing unit 152. Therefore, the second signal connection 146 may extend from the second communication interface 104 of the communication module 100 to the fourth communication interface 142 of the (further) processing unit 152 of the second device 138.

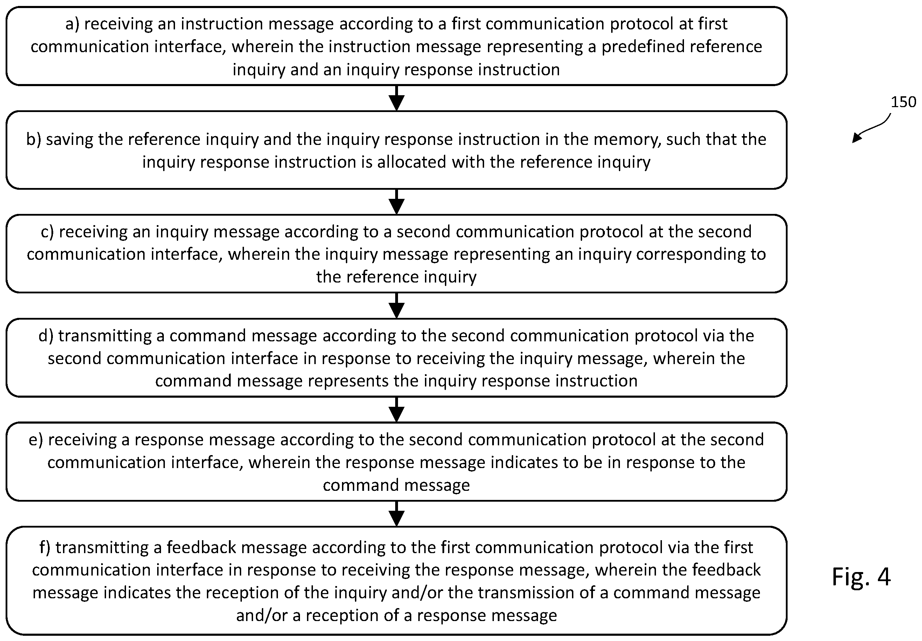

Figure 4 schematically illustrates an example of a method 150.

In an example the method 150 is configured for communication module 100 comprising a first communication interface 102, a second communication interface 104, a memory 106, and a processing unit 106. The method 150 may comprise the steps:
a) receiving an instruction message 110 according to a first communication protocol at first communication interface 102, wherein the instruction message 110 representing a predefined reference inquiry and an inquiry response instruction, saving the reference inquiry and the inquiry response instruction in the memory 106, such that the inquiry response instruction is allocated with the reference inquiry,
b) receiving an inquiry message 116 according to a second communication protocol at the second communication interface 104, wherein the inquiry message 116 representing an inquiry corresponding to the reference inquiry,
c) transmitting a command message 118 according to the second communication protocol via the second communication interface 104 in response to receiving the inquiry message 116, wherein the command message 118 represents the inquiry response instruction,
d) receiving a response message 120 according to the second communication protocol at the second communication interface 104, wherein the response message 120 indicates to be in response to the command message 118, and
e) transmitting a feedback message 122 according to the first communication protocol via the first communication interface 102 in response to receiving the response message 120 or in response to sending the command message 118, wherein the feedback message 122 indicates the reception of the inquiry and/or the transmission of a command message 118 and/or a reception of a response message 120.

For the method, reference is made in an analogous manner to the advantageous explanations, preferred features, technical effects and advantages as previously explained for the communication system 134 and/or the communication module 100.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A communication module (100) comprising:
a first communication interface (102),
a second communication interface (104),
a memory (106), and
a processing unit (108),
wherein the first communication interface is configured to receive an instruction message (110) according to a first communication protocol,
wherein the instruction message represents a predefined reference inquiry and an inquiry response instruction,
wherein the communication module is configured to save the reference inquiry and the inquiry response instruction in the memory, such that the inquiry response instruction is allocated with the reference inquiry,
wherein the second communication interface is configured to receive an inquiry message (116) according to a second communication protocol,
wherein the inquiry message representing an inquiry corresponding to the reference inquiry,
wherein the processing unit is configured in response to receiving the inquiry message to control the second communication interface, such that the second communication interface transmits a command message (118) according to the second communication protocol, wherein the command message represents the inquiry response instruction,
wherein the second communication interface is configured to receive a response message (120) according to the second communication protocol,
wherein the response message indicates to be in response to the command message, and
wherein the processing unit is configured in response to receiving the response message or sending the command message to control the first communication interface, such that the first communication interface transmits a feedback message (122) according to the first communication protocol, wherein the feedback message indicates the reception of the inquiry message and/or the transmission of the command message and/or the reception of a response message.

2. The communication module according to claim 1, wherein the processing unit is configured in response to receiving the instruction message to control the first communication interface, such that the first communication interface transmits a confirmation message (124) according to the first communication protocol, wherein the confirmation message indicates the reception of the instruction message.

3. The communication module according to any preceding claim wherein the instruction message also represents protocol implementation data for implementing the second communication protocol, and wherein the communication module is configured to implement the second communication protocol based on the received protocol implementation data.

4. The communication module according to claim 3, wherein the processing unit is configured in response to the implementation of the second communication protocol to control the first communication interface, such that the first communication interface transmits an implementation message (126) according to the first communication protocol, wherein the implementation message indicates the successful implementation of the second communication protocol.

5. The communication module according to any preceding claim, wherein the first communication protocol and the second communication protocol are different protocols.

6. The communication module according to any of the preceding claims, wherein the processing unit is configured to control the second communication interface for transmitting the command message without previously controlling the first communication interface for transmitting a message to notify a first device about the received inquiry message.

7. The communication module according to any of the preceding claims, wherein the processing unit is configured in response to receiving the response message to control the first communication interface to transmit the feedback message without decoding the response message or interpreting the response message.

8. The communication module according to any of the preceding claims, wherein the first communication interface is one communication interface of the following group of communication interfaces: ethernet communication interface, CAN communication interface, LIN communication interface, SPI communication interface, 10BASE-T1S interface, WiFi interface, FlexRay interface, USB interface.

9. The communication module according to any of the preceding claims, wherein the second communication interface is at least one communication interface of the following group of communication interfaces: ethernet communication interface, CAN communication interface, LIN communication interface, SPI communication interface, I2C interface, UART interface, FlexRay interface, 12S/PMD, PWM, I3C, GPIO.

10. A communication system (134) comprising: a first device (136), the communication module according to any of the preceding claims, a second device (138), wherein the first device comprises a third communication interface (140), that is configured to receive and transmit messages according to the first communication protocol, wherein the first device is configured to transmit the instruction message via the third communication interface to the first communication interface of the communication module, wherein the second device comprising a fourth communication interface (142), wherein the second device is configured to create and transmit the inquiry message via the fourth communication interface to the second communication interface of the communication module.

11. The communication system of the previous claim, wherein the second device is configured to receive the command message via the fourth communication interface, and wherein the second device is configured in response to receive the command message to create and transmit the response message via the fourth communication interface to the second communication interface of the communication module.

12. The communication system of any of the preceding claims 10 to 11, wherein the first device is a network controller.

13. The communication system of any of the preceding claims 10 to 11, wherein the communication module is integrated into the second device.

14. A method (150) for a communication module (100) comprising a first communication interface (102), a second communication interface (104), a memory (106), and a processing unit (108), wherein the method comprising the steps:
a) receiving an instruction message (110) according to a first communication protocol at first communication interface, wherein the instruction message representing a predefined reference inquiry and an inquiry response instruction,
b) saving the reference inquiry and the inquiry response instruction in the memory, such that the inquiry response instruction is allocated with the reference inquiry,
c) receiving an inquiry message (116) according to a second communication protocol at the second communication interface, wherein the inquiry message represents an inquiry corresponding to the reference inquiry,
d) transmitting a command message (118) according to the second communication protocol via the second communication interface in response to receiving the inquiry message, wherein the command message represents the inquiry response instruction,
e) receiving a response message (120) according to the second communication protocol at the second communication interface, wherein the response message indicates to be in response to the command message, and
f) transmitting a feedback message (122) according to the first communication protocol via the first communication interface in response to receiving the response message and/or sending the command message, wherein the feedback message indicates the reception of the inquiry and/or the transmission of a command message and/or a reception of a response message.

15. The method according to the preceding claim, wherein the instruction message also represents protocol implementation data for implementing the second communication protocol, and wherein the method comprises also the following sub-step a-b) being executed between step a) and c):
a-b) implementing the second communication protocol for the second communication interface based on the received protocol implementation data.

## Patentansprüche

1. Kommunikationsmodul (100), umfassend:
eine erste Kommunikationsschnittstelle (102),
eine zweite Kommunikationsschnittstelle (104),
einen Speicher (106) und
eine Verarbeitungseinheit (108),
wobei die erste Kommunikationsschnittstelle dazu ausgelegt ist, eine Anweisungsnachricht (110) gemäß einem ersten Kommunikationsprotokoll zu empfangen, wobei die Anweisungsnachricht eine vordefinierte Referenzanfrage und eine Anfrageantwortanweisung darstellt,
wobei das Kommunikationsmodul dazu ausgelegt ist, die Referenzanfrage und die Anfrageantwortanweisung in dem Speicher zu speichern, so dass die Anfrageantwortanweisung der Referenzanfrage zugewiesen wird,
wobei die zweite Kommunikationsschnittstelle dazu ausgelegt ist, eine Anfragenachricht (116) gemäß einem zweiten Kommunikationsprotokoll zu empfangen, wobei die Anfragenachricht eine Anfrage darstellt, die der Referenzanfrage entspricht,
wobei die Verarbeitungseinheit dazu ausgelegt ist, in Reaktion auf das Empfangen der Anfragenachricht die zweite Kommunikationsschnittstelle so zu steuern, dass die zweite Kommunikationsschnittstelle eine Befehlsnachricht (118) gemäß dem zweiten Kommunikationsprotokoll überträgt, wobei die Befehlsnachricht die Anfrageantwortanweisung darstellt,
wobei die zweite Kommunikationsschnittstelle dazu ausgelegt ist, eine Antwortnachricht (120) gemäß dem zweiten Kommunikationsprotokoll zu empfangen, wobei die Antwortnachricht angibt, dass sie eine Reaktion auf die Befehlsnachricht ist, und
wobei die Verarbeitungseinheit dazu ausgelegt ist, in Reaktion auf das Empfangen der Antwortnachricht oder das Senden der Befehlsnachricht die erste Kommunikationsschnittstelle so zu steuern, so dass die erste Kommunikationsschnittstelle eine Rückmeldungsnachricht (122) gemäß dem ersten Kommunikationsprotokoll überträgt, wobei die Rückmeldungsnachricht den Empfang der Anfragenachricht und/oder die Übertragung der Befehlsnachricht und/oder den Empfang einer Antwortnachricht angibt.

2. Kommunikationsmodul nach Anspruch 1, wobei die Verarbeitungseinheit dazu ausgelegt ist, in Reaktion auf das Empfangen der Anweisungsnachricht die erste Kommunikationsschnittstelle so zu steuern, dass die erste Kommunikationsschnittstelle eine Bestätigungsnachricht (124) gemäß dem ersten Kommunikationsprotokoll überträgt, wobei die Bestätigungsnachricht den Empfang der Anweisungsnachricht angibt.

3. Kommunikationsmodul nach einem der vorhergehenden Ansprüche, wobei die Anweisungsnachricht auch Protokollimplementierungsdaten zum Implementieren des zweiten Kommunikationsprotokolls darstellt und wobei das Kommunikationsmodul dazu ausgelegt ist, das zweite Kommunikationsprotokoll basierend auf den empfangenen Protokollimplementierungsdaten zu implementieren.

4. Kommunikationsmodul nach Anspruch 3, wobei die Verarbeitungseinheit dazu ausgelegt ist, in Reaktion auf die Implementierung des zweiten Kommunikationsprotokolls die erste Kommunikationsschnittstelle so zu steuern, dass die erste Kommunikationsschnittstelle eine Implementierungsnachricht (126) gemäß dem ersten Kommunikationsprotokoll überträgt, wobei die Implementierungsnachricht die erfolgreiche Implementierung des zweiten Kommunikationsprotokolls angibt.

5. Kommunikationsmodul nach einem der vorhergehenden Ansprüche, wobei das erste Kommunikationsprotokoll und das zweite Kommunikationsprotokoll unterschiedliche Protokolle sind.

6. Kommunikationsmodul nach einem der vorhergehenden Ansprüche, wobei die Verarbeitungseinheit dazu ausgelegt ist, die zweite Kommunikationsschnittstelle zum Übertragen der Befehlsnachricht zu steuern, ohne zuvor die erste Kommunikationsschnittstelle zum Übertragen einer Nachricht zur Benachrichtigung einer ersten Vorrichtung über die empfangene Anfragenachricht zu steuern.

7. Kommunikationsmodul nach einem der vorhergehenden Ansprüche, wobei die Verarbeitungseinheit dazu ausgelegt ist, in Reaktion auf das Empfangen der Antwortnachricht die erste Kommunikationsschnittstelle so zu steuern, dass sie die Rückmeldungsnachricht überträgt, ohne die Antwortnachricht zu decodieren oder die Antwortnachricht zu interpretieren.

8. Kommunikationsmodul nach einem der vorhergehenden Ansprüche, wobei die erste Kommunikationsschnittstelle eine Kommunikationsschnittstelle der folgenden Gruppe von Kommunikationsschnittstellen ist: Ethernet-Kommunikationsschnittstelle, CAN-Kommunikationsschnittstelle, LIN-Kommunikationsschnittstelle, SPI-Kommunikationsschnittstelle, 10BASE-T1S-Schnittstelle, WLAN-Schnittstelle, FlexRay-Schnittstelle, USB-Schnittstelle.

9. Kommunikationsmodul nach einem der vorhergehenden Ansprüche, wobei die zweite Kommunikationsschnittstelle mindestens eine Kommunikationsschnittstelle der folgenden Gruppe von Kommunikationsschnittstellen ist: Ethernet-Kommunikationsschnittstelle, CAN-Kommunikationsschnittstelle, LIN-Kommunikationsschnittstelle, SPI-Kommunikationsschnittstelle, I2C-Schnittstelle, UART-Schnittstelle, FlexRay-Schnittstelle, I2S/PMD, PWM, I3C, GPIO.

10. Kommunikationssystem (134), umfassend: eine erste Vorrichtung (136), das Kommunikationsmodul nach einem der vorhergehenden Ansprüche, eine zweite Vorrichtung (138), wobei die erste Vorrichtung eine dritte Kommunikationsschnittstelle (140) umfasst, die dazu ausgelegt ist, Nachrichten gemäß dem ersten Kommunikationsprotokoll zu empfangen und zu übertragen, wobei die erste Vorrichtung dazu ausgelegt ist, die Anweisungsnachricht über die dritte Kommunikationsschnittstelle zu der ersten Kommunikationsschnittstelle des Kommunikationsmoduls zu übertragen, wobei die zweite Vorrichtung eine vierte Kommunikationsschnittstelle (142) umfasst, wobei die zweite Vorrichtung dazu ausgelegt ist, die Anfragenachricht zu erzeugen und über die vierte Kommunikationsschnittstelle zu der zweiten Kommunikationsschnittstelle des Kommunikationsmoduls zu übertragen.

11. Kommunikationssystem nach dem vorhergehenden Anspruch, wobei die zweite Vorrichtung dazu ausgelegt ist, die Befehlsnachricht über die vierte Kommunikationsschnittstelle zu empfangen, und wobei die zweite Vorrichtung dazu ausgelegt ist, in Reaktion auf das Empfangen der Befehlsnachricht die Antwortnachricht zu erzeugen und über die vierte Kommunikationsschnittstelle zu der zweiten Kommunikationsschnittstelle des Kommunikationsmoduls zu übertragen.

12. Kommunikationssystem nach einem der vorhergehenden Ansprüche 10 bis 11, wobei die erste Vorrichtung eine Netzwerksteuerung ist.

13. Kommunikationssystem nach einem der vorhergehenden Ansprüche 10 bis 11, wobei das Kommunikationsmodul in die zweite Vorrichtung integriert ist.

14. Verfahren (150) für ein Kommunikationsmodul (100), das eine erste Kommunikationsschnittstelle (102), eine zweite Kommunikationsschnittstelle (104), einen Speicher (106) und eine Verarbeitungseinheit (108) umfasst, wobei das Verfahren die folgenden Schritte umfasst:
a) Empfangen einer Anweisungsnachricht (110) gemäß einem ersten Kommunikationsprotokoll an der ersten Kommunikationsschnittstelle, wobei die Anweisungsnachricht eine vordefinierte Referenzanfrage und eine Anfrageantwortanweisung darstellt,
b) Speichern der Referenzanfrage und der Anfrageantwortanweisung in dem Speicher, so dass die Anfrageantwortanweisung der Referenzanfrage zugewiesen wird,
c) Empfangen einer Anfragenachricht (116) gemäß einem zweiten Kommunikationsprotokoll an der zweiten Kommunikationsschnittstelle, wobei die Anfragenachricht eine Anfrage darstellt, die der Referenzanfrage entspricht,
d) Übertragen einer Befehlsnachricht (118) gemäß dem zweiten Kommunikationsprotokoll über die zweite Kommunikationsschnittstelle in Reaktion auf das Empfangen der Anfragenachricht, wobei die Befehlsnachricht die Anfrageantwortanweisung darstellt,
e) Empfangen einer Antwortnachricht (120) gemäß dem zweiten Kommunikationsprotokoll an der zweiten Kommunikationsschnittstelle, wobei die Antwortnachricht angibt, dass sie eine Reaktion auf die Befehlsnachricht ist, und
f) Übertragen einer Rückmeldungsnachricht (122) gemäß dem ersten Kommunikationsprotokoll über die erste Kommunikationsschnittstelle in Reaktion auf das Empfangen der Antwortnachricht und/oder das Senden der Befehlsnachricht, wobei die Rückmeldungsnachricht den Empfang der Anfrage und/oder die Übertragung einer Befehlsnachricht und/oder einen Empfang einer Antwortnachricht angibt.

15. Verfahren nach dem vorhergehenden Anspruch, wobei die Anweisungsnachricht auch Protokollimplementierungsdaten zum Implementieren des zweiten Kommunikationsprotokolls darstellt und wobei das Verfahren auch den folgenden Teilschritt a-b) umfasst, der zwischen Schritt a) und c) ausgeführt wird:
a-b) Implementieren des zweiten Kommunikationsprotokolls für die zweite Kommunikationsschnittstelle basierend auf den empfangenen Protokollimplementierungsdaten.

## Revendications

1. Module de communication (100) comprenant :
une première interface de communication (102),
une deuxième interface de communication (104),
une mémoire (106), et
une unité de traitement (108),
où la première interface de communication est configurée pour recevoir un message d'instruction (110) selon un premier protocole de communication, le message d'instruction représentant une interrogation de référence prédéfinie et une instruction de réponse d'interrogation,
où le module de communication est configuré pour sauvegarder l'interrogation de référence et l'instruction de réponse d'interrogation dans la mémoire, de sorte que l'instruction de réponse d'interrogation soit allouée à l'interrogation de référence,
où la deuxième interface de communication est configurée pour recevoir un message d'interrogation (116) selon un deuxième protocole de communication, où le message d'interrogation représente une interrogation correspondant à l'interrogation de référence,
où l'unité de traitement est configurée, en réponse à la réception du message d'interrogation, pour contrôler la deuxième interface de communication, de sorte que la deuxième interface de communication émette un message de commande (118) selon le deuxième protocole de communication, le message de commande représentant l'instruction de réponse d'interrogation,
où la deuxième interface de communication est configurée pour recevoir un message de réponse (120) selon le deuxième protocole de communication, où le message de réponse indique être en réponse au message de commande, et
où l'unité de traitement est configurée, en réponse à la réception du message de réponse ou à l'envoi du message de commande de la première interface de communication, de sorte que la première interface de communication transmette un message de retour (122) selon le premier protocole de communication, où le message de retour indique la réception du message d'interrogation et/ou la transmission du message de commande et/ou la réception d'un message de réponse.

2. Module de communication selon la revendication 1, dans lequel l'unité de traitement est configurée, en réponse à la réception du message d'instruction, pour contrôler la première interface de communication, de sorte que la première interface de communication transmette un message de confirmation (124) selon le premier protocole de communication, le message de confirmation indiquant la réception du message d'instruction.

3. Module de communication selon l'une quelconque des revendications précédentes, dans lequel le message d'instruction représente également des données de mise en œuvre de protocole pour mettre en œuvre le deuxième protocole de communication, et dans lequel le module de communication est configuré pour mettre en œuvre le deuxième protocole de communication sur la base des données de mise en œuvre de protocole reçues.

4. Module de communication selon la revendication 3, dans lequel l'unité de traitement est configurée, en réponse à la mise en œuvre du deuxième protocole de communication, pour contrôler la première interface de communication, de sorte que la première interface de communication transmette un message de mise en œuvre (126) selon le premier protocole de communication, où le message de mise en œuvre indique la mise en œuvre réussie du deuxième protocole de communication.

5. Module de communication selon l'une quelconque des revendications précédentes, dans lequel le premier protocole de communication et le deuxième protocole de communication sont des protocoles différents.

6. Module de communication selon l'une quelconque des revendications précédentes, dans lequel l'unité de traitement est configurée pour commander la deuxième interface de communication pour transmettre le message de commande sans commander au préalable la première interface de communication pour transmettre un message afin de notifier à un premier dispositif le message d'interrogation reçu.

7. Module de communication selon l'une quelconque des revendications précédentes, dans lequel l'unité de traitement est configurée, en réponse à la réception du message de réponse, pour contrôler la première interface de communication afin de transmettre le message de retour sans décoder le message de réponse ni interpréter le message de réponse.

8. Module de communication selon l'une quelconque des revendications précédentes, dans lequel la première interface de communication est une interface de communication du groupe d'interfaces de communication suivant : une interface de communication Ethernet, une interface de communication CAN, une interface de communication LIN, une interface de communication SPI, une interface 10BASE-T1S, une interface WiFi, une interface FlexRay, une interface USB.

9. Module de communication selon l'une quelconque des revendications précédentes, dans lequel la deuxième interface de communication est au moins une interface de communication du groupe d'interfaces de communication suivant : une interface de communication Ethernet, une interface de communication CAN, une interface de communication LIN, une interface de communication SPI, une interface de type I2C, une interface UART, une interface FlexRay, 12S/PMD, PWM, I3C, GPIO.

10. Système de communication (134) comprenant : un premier dispositif (136), le module de communication selon l'une quelconque des revendications précédentes, un deuxième dispositif (138), le premier dispositif comprenant une troisième interface de communication (140), configurés pour recevoir et transmettre des messages selon le premier protocole de communication, le premier dispositif étant configuré pour transmettre le message d'instruction par l'intermédiaire de la troisième interface de communication vers la première interface de communication du module de communication, le deuxième dispositif comprenant une quatrième interface de communication (142), le deuxième dispositif étant configuré pour créer et transmettre le message d'interrogation par l'intermédiaire de la quatrième interface de communication vers la deuxième interface de communication du module de communication.

11. Système de communication selon la revendication précédente, dans lequel le deuxième dispositif est configuré pour recevoir le message de commande par l'intermédiaire de la quatrième interface de communication, et dans lequel le deuxième dispositif est configuré, en réponse à la réception du message de commande, pour créer et transmettre le message de réponse, par l'intermédiaire de la quatrième interface de communication, à la deuxième interface de communication du module de communication.

12. Système de communication selon l'une quelconque des revendications précédentes 10 et 11, dans lequel le premier dispositif est un contrôleur réseau.

13. Système de communication selon l'une quelconque des revendications précédentes 10 et 11, dans lequel le module de communication est intégré dans le deuxième dispositif.

14. Procédé (150) destiné à un module de communication (100) comprenant une première interface de communication (102), une deuxième interface de communication (104), une mémoire (106) et une unité de traitement (108), le procédé comprenant les étapes suivantes :
a) recevoir un message d'instruction (110) selon un premier protocole de communication au niveau d'une première interface de communication, le message d'instruction représentant une interrogation de référence prédéfinie et une instruction de réponse d'interrogation,
b) sauvegarder l'interrogation de référence et l'instruction de réponse d'interrogation dans la mémoire, de sorte que l'instruction de réponse d'interrogation soit allouée à l'interrogation de référence,
c) recevoir un message d'interrogation (116) selon un deuxième protocole de communication au niveau de la deuxième interface de communication, le message d'interrogation représentant une interrogation correspondant à l'interrogation de référence,
d) émettre un message de commande (118) selon le deuxième protocole de communication par l'intermédiaire de la deuxième interface de communication en réponse à la réception du message d'interrogation, le message de commande représentant l'instruction de réponse d'interrogation,
e) recevoir un message de réponse (120) selon le deuxième protocole de communication au niveau de la deuxième interface de communication, le message de réponse indiquant être en réponse au message de commande, et
f) émettre un message de retour (122) selon le premier protocole de communication par l'intermédiaire de la première interface de communication en réponse à la réception du message de réponse et/ou à l'envoi du message de commande, le message de retour indiquant la réception de l'interrogation et/ou l'émission d'un message de commande et/ou une réception d'un message de réponse.

15. Procédé selon la revendication précédente, dans lequel le message d'instruction représente également des données de mise en œuvre de protocole pour la mise en œuvre du deuxième protocole de communication, le procédé comprenant également la sous-étape a-b) suivante exécutée entre l'étape a) et l'étape c) :
a-b) mettre en œuvre le deuxième protocole de communication pour la deuxième interface de communication sur la base des données de mise en œuvre du protocole reçues.
